# EUROPÄISCHE PATENTANMELDUNG

(11) **EP 1 724 193 A1**
(43) Veröffentlichungstag der Anmeldung: **22.11.2006**
(21) Anmeldenummer: 06003672.0
(22) Anmeldetag: 23.02.2006
(51) Int. Cl.: B64D 11/06, B60R 22/02, B60R 22/20, B60N 2/30

(54) **Fluggastsitz**

(30) Priorität: 19.05.2005 DE 102005022950
(71) Anmelder: Recaro Aircraft Seating GmbH & Co. KG, 74523 Schwäbisch Hall (DE)
(72) Erfinder: Funke, Matthias, 74544 Michelbach (DE)
(74) Vertreter: Bartels & Partner

(57) **Zusammenfassung**

Bei einem Fluggastsitz mit Sitzkomponenten wie beispielsweise Sitzteil (7), Rückenlehne (1), Armlehne (3) und ein Gurtsystem (37, 41) enthaltende Sicherheitseinrichtung ist das Gurtsystem mit einem Schultergurt (37) versehen, der mit zumindest einem am Sitzteil (7) seitlich angebrachten Gurtschloßelement (31) zusammenwirkt.

## Beschreibung

Die Erfindung bezieht sich auf einen Fluggastsitz mit Sitzkomponenten wie beispielsweise Sitzteil, Rückenlehne, Armlehne und ein Gurtsystem enthaltende Sicherheitseinrichtung.

Um die für die Verkehrsluftfahrt gültigen gesetzlichen Sicherheitsvorschriften zu erfüllen, ist bei den für Verkehrsflugzeuge üblichen Fluggastsitzen ein Beckengurt als Bestandteil der Sitz-Sicherheitseinrichtung vorgesehen, zu der üblicherweise auch die in eine aufrechte Sicherheitsposition einstellbare Rückenlehne mit Kopfstütze gehört. Wie die Erfahrung gezeigt hat, gewährleistet die Benutzung des Beckengurtes bei den im normalen Flugbetrieb auf den Passagier einwirkenden Kräften, selbst bei starken, im Flug auftretenden Turbulenzen, eine ausreichende Sicherung des Passagiers im Sitz. Unter nicht normalen Bedingungen, beispielsweise in einem Crashfall, ist die Sicherheitswirkung des Beckengurtes jedoch nicht zufriedenstellend, selbst wenn die Rückenlehne in ihre aufrechte Sicherheitsposition eingestellt ist, wie sie für die Betriebsphasen des Rollens, Startens und Landens vorgeschrieben ist.

Im Hinblick hierauf liegt der Erfindung die Aufgabe zugrunde, einen Fluggastsitz zur Verfügung zu stellen, dessen Sicherheitseinrichtung dem Passagier einen besseren Schutz vor möglichen Verletzungen bietet.

Erfindungsgemäß ist diese Aufgabe durch einen Fluggastsitz gelöst, der die Merkmale des Patentanspruches 1 in seiner Gesamtheit aufweist.

Dadurch, dass gemäß dem kennzeichnenden Teil des Anspruches 1 das Gurtsystem mit einem zusätzlichen Schultergurt versehen ist, der sowohl bei Roll-, Start- und Landephase als auch unter sämtlichen anderen Flugbedingungen verwendet werden kann, wird ein bedeutender Zuwachs an Sicherheit für den Passagier erreicht. Insbesondere führt die Benutzung eines zusätzlichen Schultergurtes im Crashfall zu geringeren Vorverlagerungen des Oberkörpers und dadurch zu geringeren Verletzungen beim Passagier.

Bei vorteilhaften Ausführungsbeispielen ist der Schultergurt an der Rückenlehne angebracht und ist Bestandteil eines Drei-Punkt-Gurtsystemes. Die Verwendung eines Drei-Punkt-Gurtsystemes bietet dem Passagier, wie die Erfahrung mit derartigen Gurtsystemen im Kraftfahrzeugbetrieb gezeigt hat, nicht nur ein hohes Maß an Bedienungsbequemlichkeit sondern auch ein sehr hohes Maß an Sicherheit. Die angesprochene erfindungsgemäße Lösung braucht nicht auf ein Single-Sitz-Layout beschränkt zu sein, sondern findet insbesondere Anwendung im Mehrsitzbereich, beispielsweise bei einem Double-Sitz in Nebeneinanderanordnung entweder links oder rechts, im sog. Triple-Sitz nur mittig und am Vierer-Sitz nicht an der Außenseite.

Bei derartigen Ausführungsbeispielen ist das Gurtschloßelement am Sitzteil wahlweise für die Verankerung des Schultergurtes, des diesen enthaltenen Drei-Punkt-Gurtsystems oder eines gesonderten Beckengurtes vorgesehen.

Um die wirksame Gurthöhe des Schultergurtes zu verändern, um das Gurtsystem an Passagiere unterschiedlicher Körpergrößen optimal anzupassen, ist vorzugsweise an der Rückenlehne eine Höheneinstelleinrichtung zum wahlweisen Verändern der wirksamen Gurthöhe des Schultergurtes vorgesehen, d. h. zur Veränderung der Anbindungsstelle des Schultergurtes relativ zur Rückenlehne. Aufgrund der Höheneinstelleinrichtung, insbesondere in Form eines lageveränderlichen Auflageteils für den Sitz, welches in eine Gebrauchsstellung gebracht werden kann, läßt sich der sog. Seat-Reference-Point (SRP) ändern, der Rückschlüsse zuläßt über die Sitzgeometrie und die damit zusammenhängenden Abstände. Insoweit läßt sich in ergonomisch günstiger Weise mit den erfindungsgemäßen Maßnahmen der Seat-Reference-Point vorgeben.

Im Hinblick hierauf kann bei besonders vorteilhaften Ausführungsbeispielen die Rückenlehne eine an ihrer Anlehnfläche höheneinstellbar gelagerte Kopfstütze aufweisen, wobei diese als Höheneinstelleinrichtung für den Schultergurt ein Gurtführungselement enthalten kann, das die Anbindungsstelle des Schultergurtes definiert, so dass die Höheneinstellung der Kopfstütze die Einstellung der wirksamen Gurthöhe des Schultergurtes bewirkt.

Aufgrund der Möglichkeit, die wirksame Gurthöhe des Schultergurtes nach Wunsch zu verändern, eignen sich derartige Ausführungsbeispiele des erfindungsgemäßen Fluggastsitzes besonders gut für den Fall, dass Kinder als Passagiere zu befördern sind und ein Kindersitz zur Anwendung kommt. Die Möglichkeit der Veränderung der Gurthöhe des Schultergurtes erlaubt die optimale Anpassung an die jeweilige Körpergröße des betreffenden Kindes. Bei derartigen Ausführungsbeispielen ist erfindungsgemäß vorgesehen, dass zumindest ein Gurtschloßelement am Sitzteil für die Lagesicherung eines sich in seiner Gebrauchsstellung oberhalb der Sitzfläche des Sitzteiles befindlichen Kindersitzes vorgesehen ist, der eine Sitzerhöhung für das den Fluggastsitz benutzende Kind bildet.

In besonders vorteilhafter Weise kann der Fluggastsitz einen integrierten Kindersitz mit einem eine erhöhte Kinder-Sitzfläche bildenden Auflageteil aufweisen, das an zumindest einem Schwenkhebel gelagert und bei Nicht-Gebrauch mit diesem in eine gegenüber der Sitzfläche des Sitzteiles nach unten weg geklappte Verstaustellung und aus dieser in seine Gebrauchsstellung hoch schwenkbar ist, in der das Auflageteil die höher liegende Kinder-Sitzfläche oberhalb der Sitzfläche des Sitzteiles bildet.

Für die Lagesicherung des Auflageteiles in der Gebrauchsstellung kann am jeweiligen Schwenkhebel des Auflageteiles ein Gurtschloßelement vorhanden sein, das bei der Gebrauchsstellung des Auflageteiles mit einem zugeordneten Gurtschloßelement am Sitzteil verrastet, so dass das Auflageteil in der Gebrauchsstellung gesichert ist.

Dabei kann die Anordnung so getroffen sein, dass zumindest ein Schwenkhebel des Auflageteiles ein weiteres, zweites Gurtschloßelement aufweist, das bei der Gebrauchsstellung des Kindersitzes wahlweise für die Verankerung des Schultergurtes, eines diesen enthaltenden Drei-Punkt-Gurtsystemes oder eines gesonderten Beckengurtes vorgesehen ist.

Nachstehend ist die Erfindung anhand von in der Zeichnung dargestellten Ausführungsbeispielen im einzelnen erläutert: Es zeigen:
- Fig. 1 eine perspektivische, abgebrochen und stark schematisch vereinfacht gezeichnete Schrägansicht eines Ausführungsbeispieles des erfindungsgemäßen Fluggastsitzes, wobei ein Armlehnen-Seitenteil weggelassen ist;
- Fig. 2 eine perspektivische, stark schematisch vereinfacht gezeichnete Darstellung lediglich des Rückenlehnenbereiches eines gegenüber Fig. 1 abgewandelten Ausführungsbeispieles des erfindungsgemäßen Fluggastsitzes;
- Fig. 3 eine perspektivische, stark schematisch vereinfacht gezeichnete Schrägansicht eines weiteren Ausführungsbeispieles des erfindungsgemäßen Fluggastsitzes, wobei ein Armlehnen-Seitenteil weggelassen und der Zustand bei Nicht-Gebrauch eines integrierten Kindersitzes gezeigt ist, und
- Fig. 4 eine der Fig. 3 entsprechende Ansicht, wobei der Zustand bei der Gebrauchsstellung des Kindersitzes gezeigt ist.

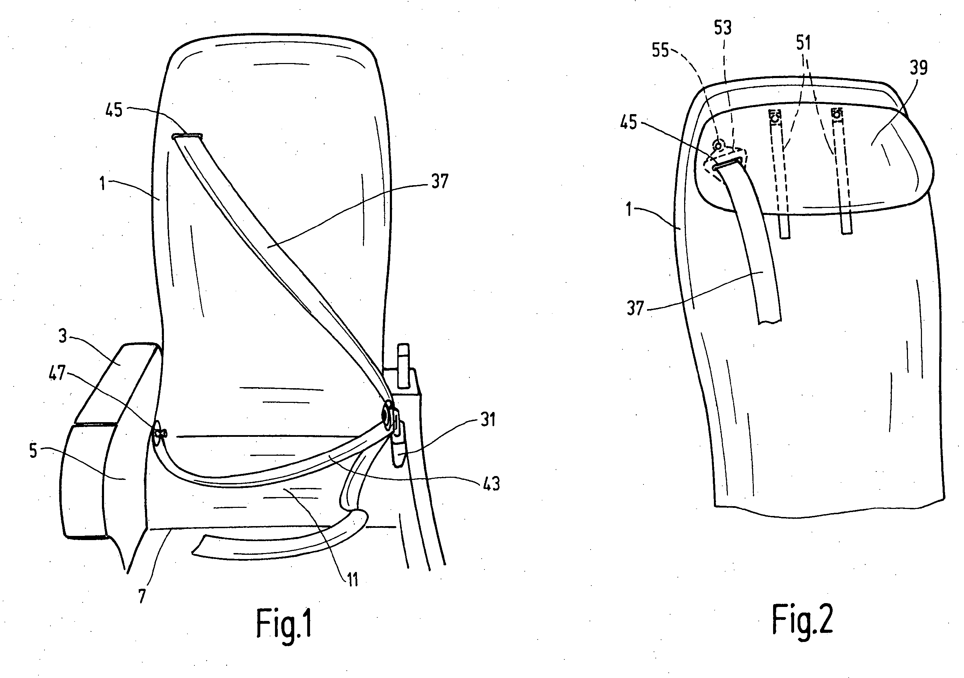

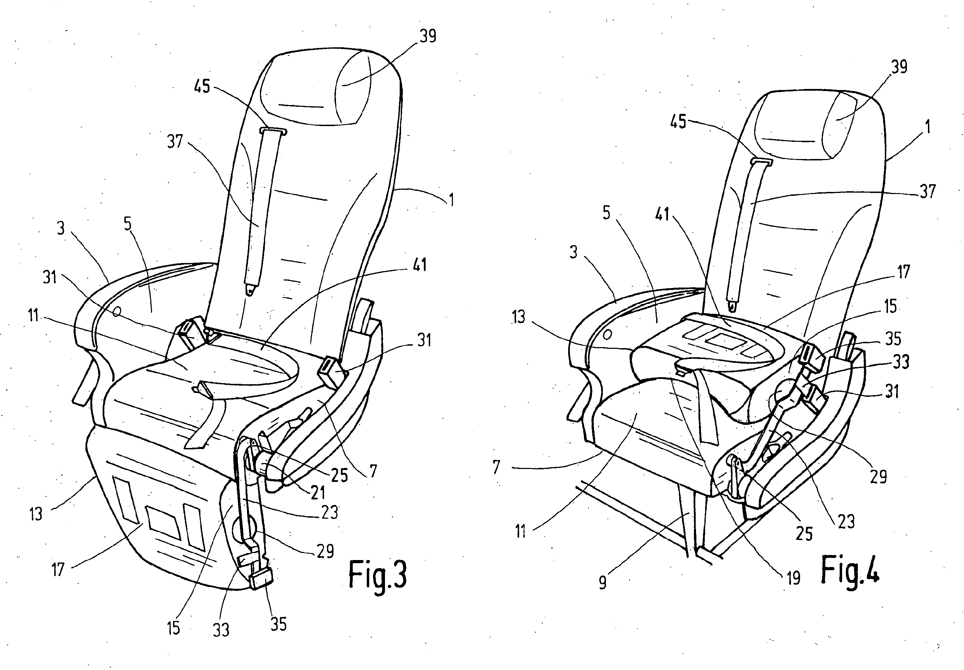

Fig. 1 zeigt von einem Fluggastsitz gemäß einem ersten Ausführungsbeispiel der Erfindung lediglich einige zur Erläuterung der Erfindung wesentliche Bauelemente, wobei eine Rückenlehne mit 1 bezeichnet ist. Von zwei seitlichen Armlehnen ist der Übersichtlichkeit halber lediglich eine Armlehne 3 eingezeichnet, deren unteres Seitenteil mit 5 bezeichnet ist. Sofern der Fluggastsitz Bestandteil einer Mehrsitzanordnung ist, braucht die zuordenbare Armlehne, die in der Mitte der Sitzreihe angeordnet ist, kein zugeordnetes Seitenteil und braucht nicht nach unten zum Sitzboden hin geschlossen zu sein. Vorzugsweise sind die zuordenbaren Seitenteile für die dahingehende Sitzreihe nur an den Außenarmlehnen, um hier eine Begrenzung der Sitzeinheit gegenüber der Umgebung zu gewährleisten. Die an der Oberseite des Sitzteiles 7 befindliche Passagier-Sitzfläche ist mit 11 bezeichnet. Als Bestandteil eines Sitz-Gurtsystemes ist ein Gurtschloßelement 31 im seitlichen Randbereich der Sitzfläche 11 an der Sitzstruktur verankert. Bei dem in Fig. 1 gezeigten Beispiel bildet ein Schultergurt 37 Bestandteil des Gurtsystemes. Der Schultergurt 37, der von einer Anbindungsstelle 45 an der Rückenlehne 1 ausgehend, über die Sitzbreite hinweg schräg verlaufend, mit dem Gurtschloßelement 31 verrastet werden kann (der verrastete Zustand ist in Fig. 1 dargestellt), bildet beim vorliegenden Ausführungsbeispiel Bestandteil eines sogenannten Drei-Punkt-Gurtsystemes in Kombination mit einem zugehörigen Beckengurt 43, dessen dem Gurtschloßelement 31 entferntes Ende an einer Verankerungsstelle 47 verankert ist, die sich, dem Gurtschloßelement 31 gegenüberliegend, an der Sitzstruktur befindet. An Stelle der in Fig. 1 gezeigten Lösung, wo der Schultergurt 37 zusammen mit einem integrierten Beckengurt 43 das Drei-Punkt-Gurtsystem bildet, kann wie nachstehend beim Beispiel von Fig. 3 und 4 gezeigt, ein separater Beckengurt 41 vorgesehen sein, gegebenenfalls in Verbindung mit einem ihm eigens zugeordneten Gurtschloßelement.

In der in der Kraftfahrzeugtechnik üblichen Weise kann der Schultergurt 37 ohne Verlängerungs- oder Verkürzungselemente vorgesehen sein (wie gezeigt), wobei entsprechend der in der Kraftfahrzeugtechnik üblichen Weise eine Gurtaufroll- und Auszieheinrichtung vorhanden ist (nicht gezeigt), die an einem entsprechenden Strukturelement festgelegt ist, gurtstraffend wirkt und in üblicher Weise schnelle Ausziehbewegungen sperrt.

Fig. 2 zeigt ein abgewandeltes Ausführungsbeispiel, bei dem eine Höheneinstelleinrichtung vorhanden ist, mittels deren die wirksame Gurthöhe des Schultergurtes 37 veränderbar ist, d. h. mittels deren die Gurt-Anbindungsstelle 45 relativ zur Rückenlehne 1 lageeinstellbar ist. Beim Beispiel von Fig. 2 befindet sich an der Anlehnfläche im oberen Bereich der Rückenlehne 1 eine Kopfstütze 39, die mittels sperrbarer Verschiebeführungen 51 an der Rückenlehne 1 höheneinstellbar ist. Zur Bildung der Anbindungsstelle 45 erstreckt sich der Schultergurt 37, von der Rückenlehne 1 ausgehend, durch ein in die Kopfstütze 39 integriertes Gurtführungselement 53 hindurch und aus der Vorderseite der Kopfstütze 39 heraus. Das der Kopfstütze 39 zugeordnete, an einer Schwenkstelle 55 schwenkbeweglich gelagerte Gurtführungselement 53 bildet daher eine Höheneinstelleinrichtung, die die wirksame Gurthöhe des Schultergurtes 37 in Abhängigkeit von der Höheneinstellung der Kopfstütze 39 entlang der Führungen 51 verändert.

Fig. 3 und 4 zeigen ein weiter abgewandeltes Ausführungsbeispiel, bei dem der Fluggastsitz nicht nur mit einem Schultergurt 37, sondern zusätzlich mit einem integrierten Kindersitz versehen ist, der zur Bildung einer erhöhten Kinder-Sitzfläche 17 oder 19 (siehe Fig. 4) mit einem beweglichen Sitz-Auflageteil versehen ist, das bei diesem Ausführungsbeispiel durch ein Formkissen 13 gebildet ist.

Das mit 7 bezeichnete Sitzteil, das über Sitzfüße 9 (Fig. 4) auf einem zugehörigen Kabinenboden aufgeständert ist, weist die Sitzfläche 11 zur Nutzung durch einen erwachsenen Passagier auf. Fig. 3 zeigt den Fluggastsitz in dem Zustand, der für die Benutzung durch einen erwachsenen Passagier vorgesehen ist, d. h. den Zustand des Nicht-Gebrauches des dem Sitz zugehörigen Kindersitzes. In diesem Zustand befindet sich das Formkissen 13, das zur Bildung eines Kindersitzes verwendet wird, in der in Fig. 3 gezeigten Verstaustellung, in der das Formkissen 13 sich in einer nach unten abgeklappten Stellung befindet, in der sich das Formkissen 13 im wesentlichen unterhalb des vorderen Randbereiches des Sitzteiles 7 und im Bereich der Sitzfüße 9 befindet.

Fig. 4 zeigt den Zustand, bei dem sich das Formkissen 13 in der Gebrauchsstellung als Kindersitz befindet, wobei es aus der in Fig. 3 gezeigten Verstaustellung nach oben geklappt ist und auf der Sitzfläche 11 des Sitzteiles 7 liegt. Bei der Darstellung von Fig. 4 bildet das Formkissen 13 mit seiner oben liegenden, zwischen im wesentlichen ebenen Seitenflächen 15 verlaufenden Breitseite eine Kinder-Sitzfläche 17, die eine im wesentliche ebene oder leicht konvex gewölbte Form besitzt. Das lageveränderliche Formteil, das sie Sitzfläche bildet, hat aber bei einer besonders bevorzugten Ausführungsform eine auf beiden Seiten im wesentlichen ebene Form. Die unterschiedliche Sitzhöhe wird dabei durch die Drehachse gebildet, die sich außerhalb der Mitte befindet und somit unterschiedliche Sitzhöhen für den Sitzbenutzer generiert.

Die entgegengesetzte Breitseite des Formkissens 13, die bei der Darstellung von Fig. 3 untenliegend ist, ist zur Bildung einer Art Sitzmulde konkav gewölbt oder vertieft. Aufgrund dieser Vertiefung kann diese Breitseite, wenn das Formkissen 13 aus der in Fig. 4 gezeigten Orientierung um 180° verdreht ist, eine Kinder-Sitzfläche 19 bilden, die gegenüber der Kinder-Sitzfläche 17 eine geringere Sitzerhöhung bildet. Die Einzeleinheiten der Einstelleinrichtung zum Überführen des Formkissen 13 zwischen ageklappter Verstaustellung und Gebrauchsstellung sowie zur Änderung der Orientierung des Formkissens 13 für die wahlweise Nutzung der Kinder-Sitzfläche 17 oder der Kinder-Sitzfläche 19 werden anhand der Fig. 3 und 4 näher erläutert.

Fig. 3 zeigt in stark schematisch vereinfachter Darstellung die Nicht-Gebrauchsstellung des Kindersitzes, wobei das Formkissen 13 um den Bereich eines quer verlaufenden Tragholmes 21 herum nach unten geschwenkt ist, so dass es sich entlang eines Sitzfußes 9 gegen den Kabinenboden hin erstreckt. Für die Schwenkbewegung zwischen der in Fig. 3 gezeigten Verstaustellung und der Gebrauchsstellung, wie sie in Fig. 4 gezeigt ist, ist das Formkissen 13 an seitlichen Schwenkhebeln 23 gelagert, deren eines, bogenförmig gekrümmtes Ende jeweils an einem Lagerbock 25 schwenkbar gelagert ist, die am Tragholm 21 befestigt sind und sich von diesem nach oben erstrecken. Der Lagerbock 25 muß nicht zwingend am Tragholm schwenkbar gelagert sein, sondern er könnte auch entsprechend am Sitzteiler des Sitzes befestigt werden. In den Fig. ist jeweils nur einer der Schwenkhebel 23 sichtbar. An den gekrümmten Abschnitt jedes Schwenkhebels 23 schließt sich ein, von einer leichten Abkröpfung nach außen abgesehen, gerader Abschnitt des Schwenkhebels 23 an, von dem sich ein seitlicher Schwenkzapfen zum Formkissen 13 hin erstreckt. Deren Seitenflächen 15 weisen jede einen Drehteller 29 in Form einer runden Scheibe auf, die mit dem Kernmaterial des Formkissens 13 an dessen Seitenfläche 15 verbunden ist, beispielsweise in ein den Kern des Formkissens 13 bildendes Schaumstoffmaterial eingeschäumt ist.

Die Drehteller 29 bilden zusammen mit dem Schwenkzapfen am Schwenkhebel 23 eine Drehlagerung, um die das Formkissen 13 drehbar ist. Die Lage der Drehlagerung ist so gewählt, dass das Formkissen 13 bei der Gebrauchsstellung die in Fig. 4 gezeigte Position einnehmen kann, bei der die Kinder-Sitzfläche 17 obenliegend ist, oder eine um 180° gewendete Position einnehmen kann, bei der in der Gebrauchsstellung des Kindersitzes die andere, vertiefte Kinder-Sitzfläche 19 (Fig. 4) obenliegend ist, wobei die Kinder-Sitzhöhe vergleichsweise niedriger liegt.

Am Sitzteil 7 sind beidseits der Sitzfläche 11 Gurtschloßelemente 31 angebracht (Fig. 3). Bei der Gebrauchsstellung des Kindersitzes, also bei hoch geschwenktem Kissen 13 entsprechend der Darstellung der Fig. 4, dienen diese Gurtschloßelemente 31 der Sicherung des Kindersitzes in der Gebrauchsstellung, d. h. der Lagesicherung des Formkissens 13. Zu diesem Zweck erstreckt sich von jedem Schwenkhebel 23 im Bereich des Drehtellers 29 ein zum Gurtschloßelement 31 komplementäres Gurtschloßelement 33, das bei hoch geschwenktem Schwenkhebel 23 mit dem Gurtschloßelement 31 verrastet, siehe Fig. 4. Wie besonders deutlich aus Fig. 4 zu ersehen ist, ist der Schwenkhebel 23 über den Bereich des Schwenkzapfens am Drehteller 29 hinaus verlängert und weist am verlängerten Ende ein zweites Gurtschloßelement 35 auf, das sich aufgrund des bei der Gebrauchsstellung des Kindersitzes schräg nach oben gerichteten Verlaufes des Schwenkhebels 23 im Bereich der Oberseite der Kinder-Sitzfläche 17 oder 19 befindet.

Dieses Gurtschloßelement 35, hier als zweites Gurtschloßelement bezeichnet, ist daher, der Sitzerhöhung des Kindersitzes angepaßt, gegenüber dem Gurtschloßelement 31 nach oben versetzt, so dass es für das Gurtsystem des Kindes in richtig angepaßter Höhenlage benutzbar ist. Hierbei kann es sich zusätzlich zum Schultergurt 37 um einen am Sitzteil verankerten, üblichen Beckengurt 41 handeln, der bei Verwendung des Kindersitzes mit dem erhöht gelegenen Gurtschloßelement 35 verrastbar ist, oder um ein Drei-Punkt-Gurtsystem, zu dem der Schultergurt 37 gehört. Dieses wird zusammen mit dem zugehörigen Beckengurt 43 mit dem höher liegenden Gurtschloßelement 35 verrastet. Der Schultergurt 37 kann bei Nicht-Gebrauch des Kindersitzes, entsprechend der Darstellung von Fig. 1, auch Teil eines Drei-Punkt-Gurtsystem für den normalen, erwachsenen Passagier bilden, wobei das Gurtsystem in diesem Falle mit einem am Sitzteil 7 befindlichen Gurtschloßelement 31 zusammenwirkt. Bei Nicht-Gebrauch des Kindersitzes ist der Beckengurt 41 für den erwachsenen Passagier mit einem der tiefer liegenden Gurtschloßelemente 31 verrastbar. Neben den angesprochenen erfindungsgemäßen Lösungen besteht auch die Möglichkeit einer Höheneinstellung des Schultergurtes mittels nicht näher dargestellten Gurtklemmen oder einer Gurtumlenkung, die gegebenenfalls auch in Verbindung stehen können mit dem bereits beschriebenen, in einer Kopfstütze 39 integrierten Gurtführungselement 53.

## Patentansprüche

1. Fluggastsitz mit Sitzkomponenten wie beispielsweise Sitzteil (7), Rükkenlehne (1), Armlehne (3) und ein Gurtsystem (37, 41, 43) enthaltende Sicherheitseinrichtung, **dadurch gekennzeichnet, dass** das Gurtsystem mit einem Schultergurt (37) versehen ist, der mit zumindest einem am Sitzteil (7) seitlich angebrachten Gurtschloßelement (31) zusammenwirkt.

2. Fluggastsitz nach Anspruch 1, **dadurch gekennzeichnet, dass** der Schultergurt (37) an der Rückenlehne (1) angebracht und Bestandteil eines Drei-Punkt-Gurtsystemes (37, 43) ist.

3. Fluggastsitz nach Anspruch 1 oder 2, **dadurch gekennzeichnet, dass** das Gurtschloßelement (31) am Sitzteil (7) wahlweise für die Verankerung des Schultergurtes (37), des diesen enthaltenden Drei-Punkt-Gurtsystems (37, 43) oder eines gesonderten Beckengurtes (41) vorgesehen ist.

4. Fluggastsitz nach einem der Ansprüche 1 bis 3, **dadurch gekennzeichnet, dass** an der Rückenlehne (1) eine Höheneinstelleinrichtung (53) zum wahlweisen Verändern der wirksamen Gurthöhe des Schultergurtes (37) vorgesehen ist.

5. Fluggastsitz nach Anspruch 4, **dadurch gekennzeichnet, dass** die Rükkenlehne (1) eine an ihrer Anlehnfläche höheneinstellbar gelagerte Kopfstütze (39) aufweist und dass diese als Höheneinstelleinrichtung für den Schultergurt ein Gurtführungselement (53) enthält, das die Anbindungsstelle (45) des Schultergurtes (37) definiert, so dass die Höheneinstellung der Kopfstütze (39) die Einstellung der wirksamen Gurthöhe des Schultergurtes (37) bewirkt.

6. Fluggastsitz nach einem der Ansprüche 1 bis 5, **dadurch gekennzeichnet, dass** zumindest ein Gurtschloßelement (31) am Sitzteil (7) für die Lagesicherung eines in seiner Gebrauchsstellung oberhalb der Sitzfläche (11) des Sitzteiles (7) befindlichen Kindersitzes (13) vorgesehen ist, der eine Sitzerhöhung für den Fluggastsitz benutzende Kinder bildet.

7. Fluggastsitz nach Anspruch 6, **dadurch gekennzeichnet, dass** er einen integrierten Kindersitz mit einem eine erhöhte Kinder-Sitzfläche (17 oder 19) bildenden Auflageteil (13) aufweist, das an zumindest einem Schwenkhebel (23) gelagert und bei Nicht-Gebrauch mit diesem in eine gegenüber der Sitzfläche (11) des Sitzteiles (7) nach unten weggeklappte Verstaustellung und aus dieser in seine Gebrauchsstellung hoch schwenkbar ist, in der das Auflageteil (13) die höher liegende Kinder-Sitzfläche (17 oder 19) oberhalb der Sitzfläche (11) des Sitzteiles (7) bildet.

8. Fluggastsitz nach Anspruch 7, **dadurch gekennzeichnet, dass** das Auflageteil (13) an je einem an jeder seiner Seitenflächen (15) befindlichen Schwenkhebel (23) gelagert ist, die ihrerseits an der Tragstruktur (21) des Sitzteiles (7) schwenkbar gelagert sind, und dass jeder Schwenkhebel (23) ein Gurtschloßelement (33) zur Verrastung mit einem zugeordneten Gurtschloßelement (31) am Sitzteil (7) aufweist.

9. Fluggastsitz nach Anspruch 8, **dadurch gekennzeichnet, dass** zumindest einer der Schwenkhebel (23) ein weiteres zweites Gurtschloßelement (35) aufweist, das bei der Gebrauchsstellung des Kindersitzes wahlweise für die Verankerung des Schultergurtes (37), eines diesen enthaltenden Drei-Punkt-Gurtsystemes (37, 43) oder eines gesonderten Beckengurtes (41) vorgesehen ist.
